# FASCICULE DE BREVET EUROPEEN

(11) **EP 1 762 317 B1**
(45) Date de publication et mention de la délivrance du brevet: **17.06.2009**
(21) Numéro de dépôt: 05108341.8
(22) Date de dépôt: 12.09.2005
(51) Int. Cl.: B23B 3/22, B23Q 5/04, B23Q 3/155

(54) **Dispositif pour le support d'outils rotatifs**
Haltevorrichtung für Drehwerkzeuge
Device for supporting rotative tools

(43) Date de publication de la demande: 14.03.2007
(73) Titulaire: Tornos SA, 2740 Moutier (CH)
(72) Inventeur: Schuettel, Patrick, 2762 Roches (CH); Boesiger, Bernard, 2740 Moutier (CH)
(74) Mandataire: BOVARD AG

(56) Documents cités:
- GB-A- 1 263 101

## Description

L'invention se rapporte à un dispositif pour le support d'outils rotatifs sur une machine-outil qui met en oeuvre ces outils rotatifs.

L'invention se rapporte également à la machine-outil équipée de ce dispositif support.

L'invention s'applique avantageusement, mais non exclusivement aux machines outils dites de décolletage.

Les utilisateurs de telles machines souhaitent qu'en plus des opérations classiques de tournage, les machines permettent de réaliser des opérations d'usinage qui impliquent l'usage d'outils d'usinage de type rotatif, dits outils rotatifs, tels des forêts, des alésoirs, des tarauds, des fraises, des meules ou autres.

Il se produit fréquemment que, pour réaliser une pièce, plusieurs outils rotatifs doivent être utilisés successivement et les constructeurs de machines outils ont dû étudier différentes solutions qui permettent de grouper plusieurs outils rotatifs sur un même support avec une certaine compacité et, de préférence, de manière telle qu'ils puissent être entraînés en rotation par un même moyen moteur.

Un résultat que l'invention vise à obtenir est un dispositif qui, avec une limite supérieure prédéterminée, permet à l'utilisateur de la machine-outil de choisir le nombre d'outils rotatifs présents sur le dispositif support.

Un autre résultat que l'invention vise à obtenir est un dispositif qui permette à l'utilisateur de remplacer aisément et rapidement un outil rotatif, par exemple en cas d'usure ou de casse, et ce sans avoir à réaliser des réglages sur le dit dispositif support.

Est encore un autre résultat que l'invention vise à obtenir, un dispositif support d'outils rotatifs dont l'inertie est réduite par rapport aux dispositifs de l'état de l'art.

Est aussi un autre résultat que l'invention vise à obtenir, un dispositif support d'outils rotatifs dont le bruit de fonctionnement est réduit.

D'autres résultats visés par l'invention seront plus après annoncés.

L'invention a donc pour objet un dispositif support d'outils rotatifs selon la revendication 1, le préambule étant défini selon le document GB-A-1 263 101, considéré comme représentant l'état de la technique le plus proche.

L'invention sera bien comprise à la lecture de la description ci-après faite à titre d'exemple non limitatif en regard du dessin ci-annexé qui représente schématiquement :

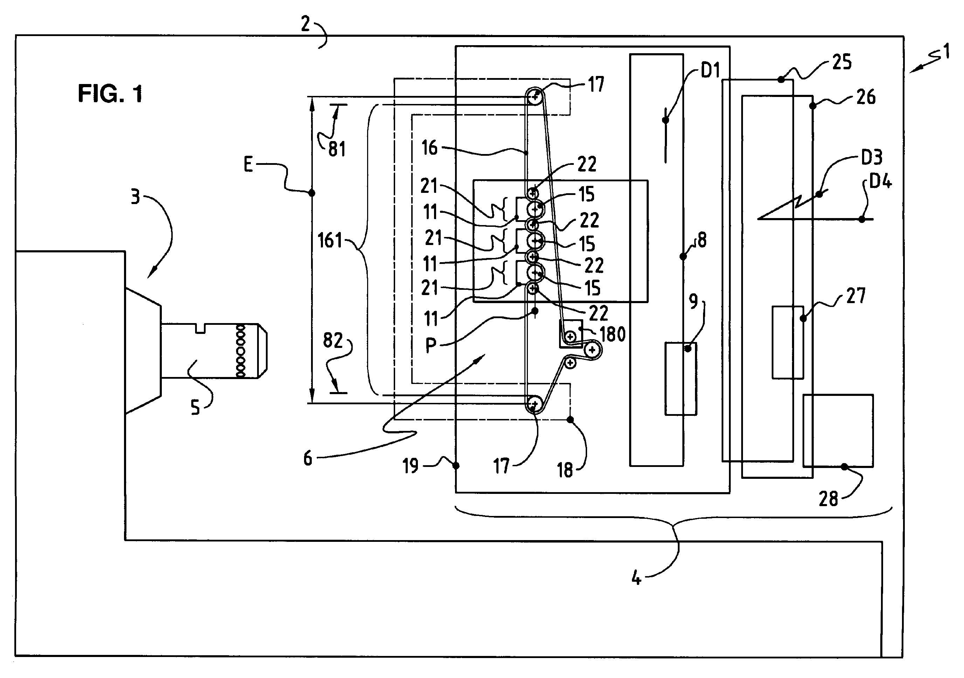

- figure 1, vue latéralement, une machine-outil équipée du dispositif support selon l'invention,

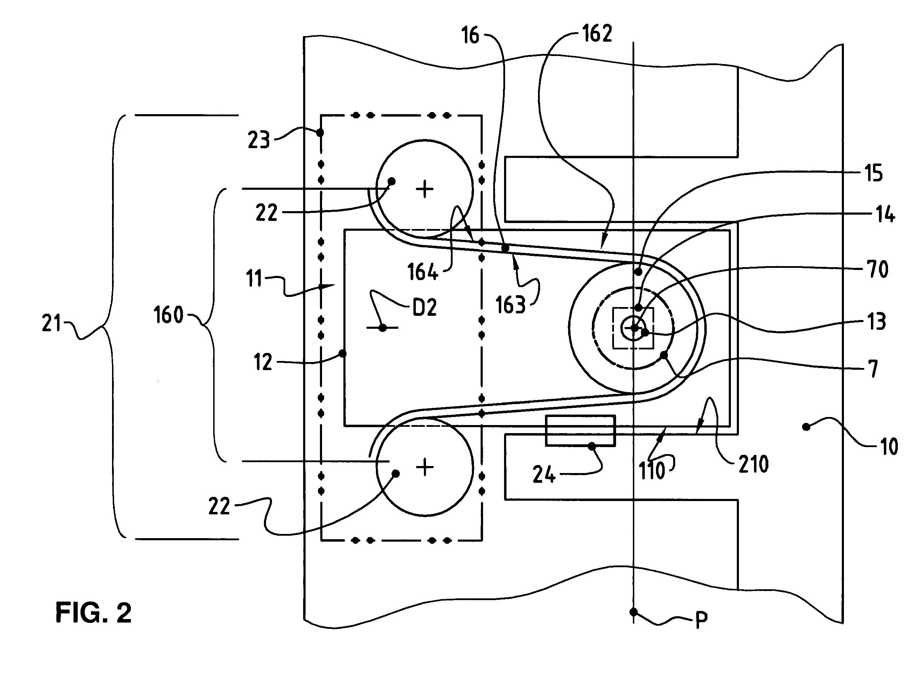

- figure 2, à plus grande échelle, un détail de la figure 1.

En se reportant au dessin, on voit une machine-outil 1.

Par exemple, il peut s'agir d'une machine de tournage, telle une machine de décolletage.

Le dessin a été réalisé sous la forme de blocs fonctionnels.

Sur le dessin, on distingue que la machine-outil 1 comprend un bâti 2 qui porte une broche 3 et au moins un système d'outils 4, c'est-à-dire un ensemble fonctionnel utilisé pour réaliser des opérations d'usinage sur une pièce 5 portée par la broche 3 de la machine-outil 1.

Chaque système d'outils 4 comprend au moins un dispositif 6 pour le support d'outils 7, dit dispositif support 6, ainsi qu'un premier moyen fonctionnel de guidage 8 et un premier moyen fonctionnel de déplacement commandé 9 de ce dispositif support 6, dans une première direction D1.

Le premier moyen fonctionnel de guidage 8 et le premier moyen fonctionnel de déplacement commandé 9 sont portés par le bâti de la machine-outil 1.

Tel que cela est représenté, au moins l'un des systèmes d'outils 4 comprend un dispositif support 5 donc la fonction est d'assurer le support d'outils 7 de type rotatifs, c'est-à-dire d'outils 7 qui, pour assurer leur fonction, doivent être entraînés en rotation autour d'un axe prédéterminé 70.

Ce dispositif support 6 a une première partie structurée 10 destinée à porter au moins un appareil 11 dit, appareil rotatif 11.

Chaque appareil rotatif 11 a une seconde partie structurée 12 et un arbre rotatif 13 monté tournant autour d'un axe de rotation 70 défini par au moins un organe de guidage en rotation 14 solidaire de ladite seconde partie structurée 12.

L'arbre rotatif 13 de chaque appareil rotatif 11 porte un organe d'entraînement en rotation 15 destiné à coopérer avec une courroie 16 maintenue en tension entre des organes de renvoi dit organes de renvoi primaires 17 d'un groupe primaire 18 d'organes et dont au moins un est entraîné par un moyen moteur 180.

Les organes de renvoi sont par exemple des galets guidés en rotation sur la partie structurée à laquelle ils sont associés.

De manière remarquable :
- la seconde partie structurée 12 de chaque appareil rotatif 11 est individualisée d'une manière telle qu'elle peut être associée au dispositif support 6 ou séparée dudit dispositif support 6 sans perdre sa cohésion et sa fonction de support de chaque organe de guidage 14 et de l'arbre rotatif 13 associé,
- le dispositif support 6 comprend au moins une station d'accueil 21 destinée à recevoir un appareil rotatif 11 d'une manière démontable, en permettant le maintien de cet appareil rotatif 11 en une position montée sur sa seconde partie structurée 10, et ce,
   - d'une part, afin d'assurer le positionnement rigoureux dudit appareil rotatif 11 par rapport à ladite première partie structurée 10,
   - d'autre part, pour que l'organe d'entraînement en rotation 15 associé à son arbre rotatif 14 coopère avec la courroie 16 dans une première partie 160 de cette courroie qui est comprise entre deux organes de renvoi 22 dit organes de renvoi secondaires 22 d'un groupe secondaire 23 de tels organes qui est situé au niveau de la station d'accueil 21, de manière à pouvoir être entraîné par cette courroie 16 et en participant à la tension de ladite courroie 16.

Le respect des caractéristiques précitées permet à l'utilisateur de la machine-outil 1 de remplacer aisément un appareil 9 à arbre rotatif par un autre identique au plan de la fonction.

De manière remarquable, le dispositif support 6 comprend plusieurs stations d'accueil 21 et une pluralité d'appareils 11 à arbre rotatif qui peuvent être chacun associé à l'une quelconque de ces stations d'accueil 21.

Le respect des caractéristiques précitées permet à l'utilisateur de la machine-outil 1 de remplacer aisément un appareil rotatif 11 par tout autre appareil rotatif 11 quel qu'il soit, c'est-à-dire que cet appareil 11 comprenne un outil identique, une outil d'un autre type, ou pas d'outil du tout.

De manière notable, chaque système d'outils 4 comprend au moins un dispositif 6 pour le support d'outils 7, dit dispositif support 6, ainsi qu'un premier moyen fonctionnel de guidage 8 et un premier moyen fonctionnel de déplacement commandé 9 de ce dispositif support 6, dans une première direction D1.

Par ailleurs, le dispositif support 6 est remarquable en ce que :
- il est porté par le premier moyen fonctionnel de guidage 8 et ce premier moyen fonctionnel de guidage 8 est lui même porté par une troisième partie structurée 19 associée au bâti 2 de la machine-outil 1 et sur laquelle troisième partie structurée 19 est disposé au moins un groupe primaire 18 d'organes de renvoi primaires 17, lesdits organes de renvoi primaires 17 étant espacés d'une distance prédéterminée E de manière telle que la courroie 16 présente, entre ces deux organes de renvois primaires 17, au moins un premier brin 161 qui s'étend substantiellement selon une première direction D1,
- la première partie structurée 10 du dispositif support 6 porte au moins deux stations d'accueil 21 chacune capable de recevoir un appareil rotatif 11 en assurant les fonctions de maintien démontable dudit appareil rotatif 11 et d'entraînement en rotation de son arbre rotatif 13 autour d'un axe de rotation 70, les dites stations d'accueil 21 étant disposées de manière telle que les appareils 11 à arbres rotatifs sont portés avec leurs axes de rotation 70 qui sont sensiblement parallèles entre eux et situés dans un même plan P lui même orienté sensiblement parallèlement à la première direction D1 de guidage du dispositif support 6.

Dans l'exemple représenté, le dispositif support 6 comprend trois stations d'accueil 21.

Ces particularités techniques permettent, par exemple, que les différents outils portés par le dispositif support 6 puissent être utilisés pour réaliser successivement sur une même pièce 5 des usinages sensiblement coaxiaux.

Autrement dit :
- la courroie 16 est maintenue en tension au moins entre deux organes de renvoi dit organes de renvoi primaires 17 d'un groupe primaire 18 d'organes porté par une troisième partie structurée 19 qui est distincte de la première partie structurée 10 du dispositif support 6 et, par rapport à laquelle ladite première partie structurée 10 est guidée en translation par le moyen 8 de guidage auquel le dispositif support 6 est associé,
- le dispositif support 6 comprend un groupe primaire 18 d'organes de renvoi primaires 17 portés par la troisième partie structurée 19, et ce groupe primaire comprend au moins deux organes de renvoi primaires 17 qui sont espacés d'une distance prédéterminée E,
- la courroie 16 présente, entre les deux organes de renvois primaires 17, au moins un premier brin 161 qui s'étend substantiellement selon la première direction D1,
- le premier moyen fonctionnel de guidage 8 associé au dispositif support 6 considéré assure le guidage suivant la première direction D1 selon laquelle le premier brin 161 s'étend, et ce, entre au moins deux positions opposées 81, 82 dont l'espacement est au plus limité par la distance prédéterminée E qui sépare les deux organes de renvois primaires 17 du groupe primaire 18 d'organes de renvoi primaires 17.

Les deux positions opposées 81, 82 sont définies par des butées (non représentées) qui peuvent être :
- réelles, c'est-à-dire consister en des obstacles mécaniques ou
- virtuelles, c'est-à-dire consister en des positions codées, particulièrement lorsque l'entraînement de la courroie 16 est assuré par un moteur pas à pas.

Tel que cela est indiqué, la troisième partie structurée 19 est associée au bâti 2 de la machine-outil 1.

De manière remarquable, la troisième partie structurée 19 est portée par le bâti 2 de la machine-outil 1 par un second moyen fonctionnel de guidage 25, 26 selon au moins une troisième direction D3, D4 sensiblement perpendiculaire à la première direction D1 et ce troisième moyen fonctionnel de guidage 25, 26 est associé à un second moyen fonctionnel de déplacement commandé 27, 28.

Avantageusement, la troisième partie structurée 19 est portée par le bâti 2 de la machine-outil 1 par deux seconds moyens fonctionnels de guidage 25, 26 selon deux troisièmes directions D3, D4 qui sont sensiblement perpendiculaires à la fois entre elles et à la première direction D1.

Dans ce cas l'un des deux seconds moyens fonctionnels de guidage 25, 26 porte l'autre, à la manière de chariots croisés.

Ces particularités techniques permettent que préserver le fonctionnement de la machine-outil.

De manière remarquable, afin de permettre une fonction de positionnement et une fonction de maintien, chaque appareil rotatif 11 et chaque station d'accueil 21 d'un appareil rotatif 11 comprennent,
- d'une part, des portées complémentaires 110 et 210, dites première portée 110 et seconde portée 210 qui, en coopérant assurent un positionnement transversal et longitudinal de chaque appareil rotatif 11,
- d'autre part, un moyen de verrouillage 24 qui peut être activé lorsque les portées complémentaires 110, 210 coopèrent.

Ces particularités techniques permettent de garantir le maintien de chaque appareil rotatif 11 dans une position précise définie par les portées complémentaires 110, 210.

L'homme de l'art est à même de concevoir ce moyen de verrouillage 24.

De manière remarquable :
- chaque station d'accueil 21 est située entre deux organes de renvoi secondaires 22 qui sont disposés de part et d'autre de la portée seconde portée 210 et entre lesquels circule une portion de courroie en formant sensiblement une boucle 162 en forme de U,
- les deux organes de renvoi secondaires 22 situés de part et d'autre de la seconde portée 210 sont disposés avec un espacement au moins suffisant pour autoriser,

- d'une part la rotation de l'organe d'entraînement en rotation 15 associé à un arbre rotatif 13 lorsque cet organe dévie la portion de courroie qui circule entre les deux organes de renvoi secondaires 22, et
- d'autre part, le montage et le démontage de l'appareil rotatif 11.

Selon une première forme remarquable (non représentée), les portées complémentaires 110, 210 définissent une direction de montage et de démontage, dite seconde direction D2, qui est sensiblement parallèle à l'axe de rotation 70 de l'arbre rotatif 7.

Suivant une seconde forme remarquable, les portées complémentaires 110, 210 définissent une direction de montage et de démontage, dite seconde direction D2, qui est sensiblement perpendiculaire à l'axe de rotation 70 de l'arbre rotatif 7.

De manière remarquable, la courroie 16 présente au moins une face crantée 163 et est orientée pour que cette face crantée 163 coopère avec l'organe d'entraînement 15 de chaque arbre rotatif 13.

Lorsque la courroie présente une face crantée 163 et une face opposée non crantée 164, c'est la face non crantée 164 qui coopère avec les organes de renvoi primaires 17.

Le moyen d'entraînement de la courroie 16 comprend au moins un organe d'entraînement qui coopère avec ladite face crantée 163.

## Revendications

1. Dispositif pour le support d'outils rotatifs (7) pour machine-outil (1), ce dispositif, dit dispositif support (6), comportant :
- une première partie structurée (10) destinée à porter de manière démontable au moins un appareil, dit appareil rotatif (11),
. chaque appareil rotatif (11) ayant un arbre rotatif (13) monté tournant autour d'un axe de rotation (70),
. l'arbre rotatif (13) de chaque appareil rotatif (11) portant un organe d'entraînement en rotation (15) destiné à coopérer avec une courroie (16) entraînée par un moyen moteur (180), et
- au moins une station d'accueil (21) destinée à recevoir un appareil rotatif (11) d'une manière démontable, en permettant le maintien de cet appareil rotatif (11) en une position montée sur sa première partie structurée (10), et ce,
. d'une part, afin d'assurer le positionnement rigoureux dudit appareil rotatif (11) par rapport à ladite première partie structurée (10),
. d'autre part, pour que l'organe d'entraînement en rotation (15) associé à son arbre rotatif (14) coopère avec la courroie (16) dans une première partie (160) de cette courroie qui est comprise entre deux organes de renvoi (22) dit organes de renvoi secondaires (22) d'un groupe secondaire (23) de tels organes qui est situé au niveau de la station d'accueil (21), de manière à pouvoir être entraîné par cette courroie (16) et en participant à la tension de ladite courroie (16).
ce dispositif étant **caractérisé en ce que** :
- l'arbre rotatif (13) de chaque appareil rotatif (11) est défini par au moins un organe de guidage en rotation (14) solidaire d'une seconde partie structurée (12) de l'appareil rotatif (11), la seconde partie structurée (12) de chaque appareil rotatif (11) étant individualisée d'une manière telle qu'elle peut être associée au dispositif support (6) ou séparée dudit dispositif support (6) sans perdre sa cohésion et sa fonction de support de chaque organe de guidage (14) et de l'arbre rotatif (13) associé,

2. Dispositif selon la revendication 1, **caractérisé en ce qu'**il comprend plusieurs stations d'accueil (21) et une pluralité d'appareils (11) à arbre rotatif qui peuvent être chacun associé à l'une quelconque de ces stations d'accueil (21).

3. Dispositif selon la revendication 1 ou 2, associé à un premier moyen fonctionnel de guidage (8) et un premier moyen fonctionnel de déplacement commandé (9) de ce dispositif support (6), dans une première direction (D1),
ce dispositif support (6) étant **caractérisé en ce que** :
- il est porté par le premier moyen fonctionnel de guidage (8) et ce premier moyen fonctionnel de guidage (8) est lui même porté par une troisième partie structurée (19) associée au bâti (2) de la machine-outil (1) et sur laquelle troisième partie structurée (19) est disposé au moins un groupe primaire (18) d'organes de renvoi primaires (17), lesdits organes de renvoi primaires (17) étant espacés d'une distance prédéterminée (E) de manière telle que la courroie (16) présente, entre ces deux organes de renvois primaires (17), au moins un premier brin (161) qui s'étend substantiellement selon une première direction (D1),
- la première partie structurée (10) du dispositif support (6) porte au moins deux stations d'accueil (21) chacune capable de recevoir un appareil rotatif (11) en assurant les fonctions de maintien démontable dudit appareil rotatif (11) et d'entraînement en rotation de son arbre rotatif (13) autour d'un axe de rotation (70), les dites stations d'accueil (21) étant disposées de manière telle que les appareils (11) à arbres rotatifs sont portés avec leurs axes de rotation (70) qui sont sensiblement parallèles entre eux et situés dans un même plan (P) lui même orienté sensiblement parallèlement à la première direction (D1) de guidage du dispositif support (6),
- le premier moyen fonctionnel de guidage (8) associé au dispositif support (6) considéré assure le guidage suivant la première direction (D1) selon laquelle le premier brin (161) s'étend, et ce, entre au moins deux positions opposées (81, 82) dont l'espacement est au plus limité par la distance prédéterminée (E) qui sépare les deux organes de renvois primaires (17) du groupe primaire (18) d'organes de renvoi primaires (17).

4. Dispositif selon la revendication 3, **caractérisé en ce que** la troisième partie structurée (19) est portée par le bâti (2) de la machine-outil (1) par un second moyen fonctionnel de guidage (25, 26) selon au moins une troisième direction (D3, D4) sensiblement perpendiculaire à la première direction (D1) et ce troisième moyen fonctionnel de guidage (25, 26) est associé à un second moyen fonctionnel de déplacement commandé (27, 28).

5. Dispositif selon l'une quelconque des revendications 1 à 4, **caractérisé en ce qu'**afin de permettre une fonction de positionnement et une fonction de maintien, chaque appareil rotatif (11) et chaque station d'accueil (21) d'un appareil rotatif (11) comprennent,
- d'une part, des portées complémentaires (110 et 210), dites première portée (110) et seconde portée (210) qui, en coopérant assurent un positionnement transversal et longitudinal de chaque appareil rotatif (11),
- d'autre part, un moyen de verrouillage (24) qui peut être activé lorsque les portées complémentaires (110, 210) coopèrent.

6. Dispositif selon la revendication 5, **caractérisé en ce que** :
- chaque station d'accueil (21) est située entre deux organes de renvoi secondaires (22) qui sont disposés de part et d'autre de la portée seconde portée (210) et entre lesquels circule une portion de courroie en formant sensiblement une boucle (162) en forme de U,
- les deux organes de renvoi secondaires (22) situés de part et d'autre de la seconde portée (210) sont disposés avec un espacement au moins suffisant pour autoriser,
. d'une part la rotation de l'organe d'entraînement en rotation (15) associé à un arbre rotatif (13) lorsque cet-organe dévie la portion de courroie qui circule entre les deux organes de renvoi secondaires (22), et
. d'autre part, le montage et le démontage de l'appareil rotatif (11).

7. Dispositif selon la revendication 5 ou 6, **caractérisé en ce que** les portées complémentaires (110, 210) définissent une direction de montage et de démontage, dite seconde direction (D2), qui est sensiblement parallèle à l'axe de rotation (70) de l'arbre rotatif (7).

8. Dispositif selon la revendication 5 ou 6, **caractérisé en ce que** les portées complémentaires (110, 210) définissent une direction de montage et de démontage, dite seconde direction (D2), qui est sensiblement perpendiculaire à l'axe de rotation (70) de l'arbre rotatif (7).

9. Dispositif selon l'une quelconque des revendications 1 à 8 **caractérisé en ce que** la courroie (16) présente au moins une face crantée (163) et est orientée pour que cette face crantée (163) coopère avec l'organe d'entraînement (15) de chaque arbre rotatif (13).

10. Machine-outil **caractérisée en ce qu'**elle est équipée d'au moins un dispositif selon l'une quelconque des revendications 1 à 9.

## Claims

1. Device for support of rotary tools (7) for a machine tool (1), this device, referred to as support device (6), comprising:
- a first structured part (10) intended to bear in a detachable way at least one apparatus, referred to as rotary apparatus (11),
• each rotary apparatus (11) having a rotary shaft (13) mounted in a way turning about a rotational axis (70),
• the rotary shaft (13) of each rotary apparatus (11) bearing an element for driving in rotation (15), intended to co-operate with a belt (16), driven by a motor means (180), and
- at least one receiving station (21) intended to receive a rotary apparatus (11) in a detachable way, by permitting the holding of this rotary apparatus (11) in a position mounted on its first structured part (10), and this
• on the one hand, in order to ensure the strict positioning of said rotary apparatus (11) with respect to said first structured part (10),
on the other hand, so that the element for driving in rotation (15) connected to its rotary shaft (14) co-operates with the belt (16) in a first part (160) of this belt which is comprised between two return elements (22), referred to as secondary return elements (22) of a secondary group (23) of such elements which is situated at the level of the receiving station (21), in such a way as to be able to be driven by this belt (16) and while participating in the tensioning of said belt (16), this device being **characterised in that**:
- the rotary shaft (13) of each rotary apparatus (11) is defined by at least one element for guiding in rotation (14), integral with a second structured part (12) of the rotary apparatus (11), the second structured part (12) of each rotary apparatus (11) being separated in such a way that it can be connected to a support device (6) or separated from said support device (6) without losing its cohesiveness and its function of support of each guide element (14) and of the connected rotary shaft (13).

2. Device according to claim 1, **characterised in that** it comprises a plurality of receiving stations (21) and a plurality of apparatus (11) with rotary shaft which can each be connected to any one of these receiving stations (21).

3. Device according to claim 1 or 2, connected to a first functional guide means (8) and a first functional means of controlled displacement (9) of this support device (6), in a first direction (D1),
this support device (6) being **characterised in that**:
- it is borne by the first functional guide means (8), and this first functional guide means (8) is itself borne by a third structured part (19) connected to the frame (2) of the machine tool (1) and on which third structured part (19) at least one primary group (18) of primary return elements (17) are disposed, said primary return elements (17) being spaced at a predetermined distance (E) in such a way that the belt (16) has, between these two primary return elements (17), at least a first end (161) extending substantially in a first direction (D1),
- the first structured part (10) of the support device (6) bears at least two receiving stations (21) each able to receive a rotary apparatus (11) by ensuring the functions of detachable holding of said rotary apparatus (11) and of driving in rotation its rotary shaft (13) about a rotational axis (70), said receiving stations (21) being disposed in such a way that the apparatus (11) with rotary shaft are borne with their rotational axes (70) that are substantially parallel to one another and are situated in the same plane (P), itself oriented substantially parallel to the first direction (D1) of guiding of the support device (6),
- the first functional guide means (8) connected to the support device (6) under consideration ensures the guiding according to the first direction (D1) in which the first end (161) extends, and this between two opposite positions (81, 82), the spacing of which is at most limited by the predetermined distance (E) which separates the two primary return elements (17) of the primary group (18) of primary return elements (17).

4. Device according to claim 3, **characterised in that** the third structured part (19) is borne by the frame (2) of the machine tool (1) by a second functional guide means (25, 26) according to at least a third direction (D3, D4) substantially perpendicular to the first direction (D1) and this third functional guide means (25, 26) is connected to a second functional means of controlled displacement (27, 28).

5. Device according to any one of the claims 1 to 4, **characterised in that** in order to allow a function of positioning and a function of holding, each rotary apparatus (11) and each receiving station (21) of a rotary apparatus (11) comprises,
- on the one hand, complementary bearing surfaces (110 and 210), referred to as first bearing surface (110) and second bearing surface (210) which, by co-operating, ensure a transversal and longitudinal positioning of each rotary apparatus (11),
- on the other hand, a locking means (24) which can be activated when the complementary bearing surfaces (110, 210) co-operate.

6. Device according to claim 5, **characterised in that**:
- each receiving station (21) is situated between two secondary return elements (22) which are disposed on each side of the second bearing surface (210) and between which a portion of the belt circulates by forming substantially a loop (162) of U shape,
- the two secondary return elements (22) situated on each side of the second bearing surface (210) are disposed with a spacing at least sufficient to allow
• on the one hand, the rotation of the element for driving in rotation (15) connected to a rotary shaft (13) when this element deflects the portion of belt which circulates between the two secondary return elements (22), and
• on the other hand, the mounting and the removal of the rotary apparatus (11).

7. Device according to claim 5 or 6, **characterised in that** the complementary bearing surfaces (110, 210) define a direction of mounting and removal, referred to as second direction (D2), which is substantially parallel to the rotational axis (70) of the rotary shaft (7).

8. Device according to claim 5 or 6, **characterised in that** the complementary bearing surfaces (110, 210) define a direction of mounting and removal, referred to as second direction (D2), that is substantially perpendicular to the rotational axis (70) of the rotary shaft (7).

9. Device according to any one of the claims 1 to 8 **characterised in that** the belt (16) has at least one ribbed face (163) and is oriented so that this ribbed face (163) co-operates with the driving element (15) of each rotary shaft (13).

10. Machine tool **characterised in that** it is equipped with at least one device according to any one of the claims 1 to 9.

## Patentansprüche

1. Haltevorrichtung für Drehwerkzeuge (7) für eine Werkzeugmaschine (1), wobei diese Vorrichtung, genannt Lagervorrichtung (6), Folgendes umfasst:
- einen ersten strukturierten Teil (10), der dazu vorgesehen ist, auf abnehmbare Weise mindestens ein Gerät, genannt Drehgerät (11), zu tragen,
. wobei jedes Drehgerät (11) eine Drehwelle (13) aufweist, die drehend um eine Drehachse (70) montiert ist,
. wobei die Drehwelle (13) jedes Drehgerätes (11) ein Drehantriebsorgan (15) trägt, das dazu vorgesehen ist, mit einem Riemen (16) zusammenzuarbeiten, der durch einen Motor (180) angetrieben wird, und
- mindestens eine Aufnahmestation (21), die dazu vorgesehen ist, ein Drehgerät (11) auf eine abnehmbare Weise (11) aufzunehmen, wobei ermöglicht wird, dass dieses Drehgerät (11) in einer Position verbleibt, die auf ihren ersten strukturierten Teil (10) montiert ist, und dies
. einerseits, um die sehr genaue Positionierung des Drehgerätes (11) bezüglich des ersten strukturierten Teils (10) sicherzustellen,
. andererseits, damit das Drehantriebsorgan (15), das mit seiner Drehwelle (14) verbunden ist, mit dem Riemen (16) in einem ersten Teil (160) dieses Riemens zusammenarbeitet, der zwischen zwei Umlenkorganen (22), genannt sekundäre Umlenkorgane (22) einer sekundären Gruppe (23) derartiger Organe enthalten ist, die sich auf dem Niveau der Aufnahmestation (21) befindet, um von diesem Riemen (16) angetrieben werden zu können, und durch Teilnahme an der Spannung dieses Riemens (16).
wobei diese Vorrichtung **dadurch gekennzeichnet ist, dass**:
- die Drehwelle (13) jedes Drehgerätes (11) durch mindestens ein Drehführungsorgan (14) definiert ist, das mit einem zweiten strukturierten Teil (12) des Drehgerätes (11) fest verbunden ist, wobei der zweite strukturierte Teil (12) jedes Drehgerätes (11) auf eine Weise individualisiert ist, dass er mit der Lagervorrichtung (6) verbunden oder von der Lagervorrichtung (6) getrennt werden kann, ohne seine Kohäsion und seine Funktion der Lagerung jedes Führungsorgans (14) und der verbundenen Drehwelle (13) zu verlieren.

2. Vorrichtung nach Anspruch 1, **dadurch gekennzeichnet, dass** sie mehrere Aufnahmestationen (21) und eine Vielzahl von Geräten (11) mit Drehwelle umfasst, die jeweils mit irgendeiner dieser Aufnahmestationen (21) verbunden werden können.

3. Vorrichtung nach Anspruch 1 oder 2, verbunden mit einem ersten funktionellen Führungsmittel (8) und einem ersten funktionellen Mittel zur gesteuerten Verschiebung (9) dieser Lagervorrichtung (6) in eine erste Richtung (D1),
wobei diese Lagervorrichtung (6) **dadurch gekennzeichnet ist, dass**:
- sie vom ersten funktionellen Führungsmittel (8) getragen wird, und dieses erste funktionelle Führungsmittel (8) selbst durch einen dritten strukturierten Teil (19), der mit dem Rahmen (2) der Werkzeugmaschine (1) verbunden ist, getragen wird, und wobei auf dem dritten strukturierten Teil (19) mindestens eine primäre Gruppe (18) von primären Umlenkorganen (17) angeordnet ist, wobei die primären Umlenkorgane mit einer vorbestimmten Distanz (E) voneinander beabstandet sind, so dass der Riemen (16) zwischen diesen zwei primären Umlenkorganen (17) mindestens einen ersten Strang (161) aufweist, der sich im Wesentlichen in eine erste Richtung (D1) erstreckt,
- der erste strukturierte Teil (10) der Lagervorrichtung (6) mindestens zwei Aufnahmestationen (21) trägt, von denen jede dazu in der Lage ist, ein Drehgerät (11) aufzunehmen, indem sie die Funktionen des abnehmbaren Festhaltens des Drehgerätes (11) und des Drehantriebs seiner Drehwelle (13) um eine Drehachse (70) sicherstellt, wobei die Aufnahmestationen (21) so angeordnet sind, dass die Geräte (11) mit Drehwellen mit ihren Drehachsen (70) getragen werden, die im Wesentlichen zueinander parallel sind und auf einer gleichen Ebene (P) liegen, die selbst im Wesentlichen parallel zu ersten Richtung (D1) der Führung der Lagervorrichtung (6) ausgerichtet ist,
- das erste funktionelle Führungsmittel (8), das mit der Lagervorrichtung (6) verbunden ist, das in Betracht gezogen wird, die Führung in der ersten Richtung (D1) sicherstellt, in der sich der erste Strang (161) erstreckt, und dies zwischen mindestens zwei gegenüberliegenden Positionen (81, 82), deren Abstand außerdem durch die vorbestimmte Distanz (E) begrenzt ist, die die zwei primären Umlenkorgane (17) der primären Gruppe (18) von primären Umlenkorganen (17) trennt.

4. Vorrichtung nach Anspruch 3, **dadurch gekennzeichnet, dass** der dritte strukturierte Teil (19) vom Rahmen (2) der Werkzeugmaschine (1) durch ein zweites funktionelles Führungsmittel (25, 26) in mindestens einer dritten Richtung (D3, D4) getragen wird, die im Wesentlichen senkrecht zur ersten Richtung (D1) ist, und dieses dritte funktionelle Führungsmittel (25, 26) ist mit einem zweiten funktionellen Mittel zur gesteuerten Verschiebung (27, 28) verbunden.

5. Vorrichtung nach einem der Ansprüche 1 bis 4, **dadurch gekennzeichnet dass**, um eine Funktion der Positionierung und eine Funktion des Festhaltens zu ermöglichen, jedes Drehgerät (11) und jede Aufnahmestation (21) eines Drehgerätes (11) Folgendes umfassen:
- einerseits komplementäre Reichweiten (110 und 210), genannt erste Reichweite (110) und zweite Reichweite (210), die, bei Zusammenarbeit, eine Quer- und Längspositionierung jedes Drehgerätes (11) sicherstellen,
- andererseits ein Verriegelungsmittel (24), das aktiviert werden kann, wenn die komplementären Reichweiten (110, 210) zusammenarbeiten.

6. Vorrichtung nach Anspruch 5, **dadurch gekennzeichnet, dass**:
- sich jede Aufnahmestation (21) zwischen zwei sekundären Umlenkorganen (22) befindet, die auf beiden Seiten der zweiten Reichweite (210) angeordnet sind, und zwischen denen ein Teil des Riemens verläuft, indem er im Wesentlichen eine Schleife (162) in Form eines U bildet,
- die zwei sekundären Umlenkorgane (22), die sich auf beiden Seiten der zweiten Reichweite (210) befinden, mit einem Abstand angeordnet sind, der mindestens ausreichend ist, um
. einerseits die Drehung des Drehantriebsorgans (15) zu ermöglichen, das mit einer Drehwelle (13) verbunden ist, wenn dieses Organ den Teil des Riemens ablenkt, der zwischen den zwei sekundären Umlenkorganen (22) verläuft, und
. andererseits die Montage und Demontage des Drehgerätes (11) zu ermöglichen.

7. Vorrichtung nach Anspruch 5 oder 6, **dadurch gekennzeichnet, dass** die komplementären Reichweiten (110, 210) eine Richtung der Montage und Demontage, genannt zweite Richtung (D2), definieren, die im Wesentlichen parallel zur Drehachse (70) der Drehwelle (7) ist.

8. Vorrichtung nach Anspruch 5 oder 6, **dadurch gekennzeichnet dass** die komplementären Reichweiten (110, 210) eine Richtung der Montage und Demontage, genannt zweite Richtung (D2), definieren, die im Wesentlichen senkrecht zur Drehachse (70) der Drehwelle (7) ist.

9. Vorrichtung nach einem der Ansprüche 1 bis 8, **dadurch gekennzeichnet, dass** der Riemen (16) mindestens eine gerändelte Seite (163) aufweist und so ausgerichtet ist, dass diese gerändelte Seite (163) mit dem Antriebsorgan (15) jeder Drehwelle (13) zusammenarbeitet.

10. Werkzeugmaschine, **dadurch gekennzeichnet, dass** sie mit mindestens einer Vorrichtung nach einem der Ansprüche 1 bis 9 ausgestattet ist.
